# FASCICULE DE BREVET EUROPEEN

(11) **EP 3 558 761 B1**
(45) Date de publication et mention de la délivrance du brevet: **10.02.2021**
(21) Numéro de dépôt: 17821976.2
(22) Date de dépôt: 07.12.2017
(51) Int. Cl.: B60S 1/04, B62D 29/04, B62D 35/00, B60J 5/10, B60R 19/02

(54) **PIÈCE DE VÉHICULE DESTINÉE À ÊTRE SOUDÉE SUR UN ÉLÉMENT DE CARROSSERIE**
FAHRZEUGTEIL ZUM VERSCHWEISSEN MIT EINEM KAROSSERIEELEMENT
VEHICLE PART INTENDED TO BE WELDED TO A BODYWORK ELEMENT

(30) Priorité: 26.12.2016 FR 1663388
(43) Date de publication de la demande: 30.10.2019
(73) Titulaire: Compagnie Plastic Omnium, 69007 Lyon (FR)
(72) Inventeur: GUILLIER, Stéphane, 01120 Dagneux (FR)
(74) Mandataire: LLR
(86) Numéro de dépôt international: PCT/FR2017/053443
(87) Numéro de publication internationale: WO 2018/122481

(56) Documents cités:
- WO-A1-2007/036440
- JP-A- H02 171 358
- US-A1- 2012 013 147

## Description

L'invention se rapporte au domaine des pièces pour l'industrie automobile comportant au moins une partie en matière plastique.

Le document US 2012/0013147 A1 divulgue une pièce de véhicule automobile en matière plastique selon le préambule de la revendication 1.

Plus précisément, l'invention concerne une pièce à rapporter, par soudage, sur un élément de carrosserie.

Différentes solutions ont déjà été proposées pour fixer une pièce en matière plastique sur une autre pièce en matière plastique servant d'élément de carrosserie. La pièce à fixer peut être un support pour un organe fonctionnel du véhicule, comme par exemple un capteur, ou un renfort tel qu'un renfort de becquet rapporté sur une surface extérieure de becquet. Les solutions connues utilisent des rivets, des vis, des encliquetages, et surtout du collage ou des soudures.

Parmi ces solutions, certaines ménagent l'aspect extérieur de l'élément supportant la pièce, en évitant notamment les retassures ou les moyens de fixation apparents. Ceci est particulièrement important lorsque l'élément de carrosserie supportant la pièce à rapporter est une pièce visible, la pièce à rapporter pouvant être un renfort.

Afin de souder une telle pièce formant un renfort sur une pièce visible, on conçoit cette pièce avec des éléments saillants, formant une protubérance, afin d'établir un contact entre les deux pièces à souder.

Pour assurer ce contact, on utilise une sonotrode dans un procédé de soudage par ultrason, ou un moyen de pressage pour un procédé de soudage par laser. L'assemblage est donc fait sous contrainte entre la pièce visible et la pièce de renfort. Ces contraintes sont nécessaires pour s'affranchir des défauts de moulage (les pièces moulées ont de légères variations géométriques) qui conduisent à un manque de contact. Ces contraintes engendrent généralement des déformations réversibles car ces contraintes restent dans la limite d'élasticité de la matière.

L'inconvénient rencontré dans un assemblage sous contrainte est la déformation de la pièce visible après le procédé de soudage. Cette déformation accentue les défauts d'aspects sur la pièce visible.

De plus, même après relâchement en fin de soudage, la pièce de renfort tend à revenir à sa forme initiale, par effet de retour élastique, et des contraintes mécaniques résiduelles restent dans les pièces. Ces contraintes limitent mécaniquement la durée de vie de la pièce.

Par ailleurs, si la pièce visible et la pièce à rapporter sont réalisées dans des matériaux ayant des coefficients de dilatation différents, alors une dilatation différentielle peut intervenir lors de l'assemblage, ou après, lors de l'utilisation sur véhicule de l'assemblage. De ce fait, des contraintes apparaissent au niveau des points de soudure, pouvant conduire à une déformation, voire à une désolidarisation des pièces.

Ces inconvénients sont d'autant plus importants que la pièce est longue, par exemple un becquet sur un hayon ou une caisse de véhicule automobile, ou une doublure de parechoc sur sa peau, ou encore, une doublure de hayon sur sa peau.

L'invention a pour but de remédier à ces inconvénients en fournissant une pièce à rapporter par soudage sur un élément de carrosserie, qui préserve l'aspect esthétique de l'élément de carrosserie visible recevant la pièce en matière plastique à souder, tout en améliorant les propriétés mécaniques (choc et/ou dilatation différentielle et/ou contraintes résiduelles).

Ainsi, l'objet de l'invention concerne une pièce de véhicule automobile en matière plastique, comportant au moins une paroi destinée à être soudée sur un élément de carrosserie, ladite paroi comportant au moins un élément saillant définissant une surface de soudage destinée à former un point de contact avec ledit élément de carrosserie. La pièce comporte autour dudit élément saillant, au moins une zone de libération de contraintes subies par l'élément saillant.

Selon l'invention, on ajoute donc une zone de flexibilité qui engendre une liberté angulaire locale sur un élément de renfort (la pièce), ce qui va à l'encontre des préconisations métier. Pourtant, cette solution, non seulement garantit une limitation des défauts d'aspect, mais améliore la tenue mécanique de l'assemblage.

Par ailleurs, la flexibilité locale de la pièce facilite la mise en contact pour l'opération de soudage.

Un avantage supplémentaire de cette pièce est le gain de matière réalisé sur cette pièce dans le cas de figure où la flexibilité est obtenue par un évidement de matière réalisé au moulage.

La pièce peut en outre comporter l'une ou plusieurs des caractéristiques suivantes, prises seules ou en combinaison :
- la zone de libération de contraintes est une zone flexible de la paroi, configurée pour permettre une libération des contraintes dans les trois dimensions de l'espace ;
- la zone de libération de contraintes comporte au moins un élément de flexibilité, choisi seul ou en combinaison parmi au moins l'un des éléments suivants : une section restreinte par rapport à la section locale de la paroi, un évidement de matière, une découpe, une portion en un matériau plus flexible que le matériau local de la paroi ;
- l'élément de flexibilité forme sensiblement une couronne autour de l'élément saillant ;
- la zone de libération de contraintes comporte plusieurs éléments de flexibilité répartis autours de l'élément saillant ;
- l'élément saillant forme localement une protubérance d'une hauteur d'environ 1,5mm ;
- la pièce est réalisée dans l'une des matières suivantes : polypropylène (PP), polycarbonate- acrylonitrile butadiène styrène (PC-ABS), acrylonitrile styrène acrylate (ASA).

L'invention concerne également un ensemble d'un élément de carrosserie et d'une pièce selon l'invention. L'ensemble peut en outre comporter l'une ou plusieurs des caractéristiques suivantes, prises seules ou en combinaison :
- l'élément de carrosserie est réalisé dans l'une des matières suivantes : polypropylène (PP), polycarbonate- acrylonitrile butadiène styrène (PC-ABS), acrylonitrile butadiène styrène (ABS) ;
- l'ensemble forme une pièce de carrossière de véhicule automobile ;
- l'ensemble est un hayon, un pare-chocs ;
- l'ensemble est un becquet, l'élément de carrosserie est une surface extérieure de becquet, et la pièce est un renfort de becquet.

L'invention sera mieux comprise à la lecture des figures annexées, qui sont fournies à titre d'exemples et ne présentent aucun caractère limitatif, dans lesquelles :
- la figure 1 illustre un exemple de pièce de véhicule automobile en matière plastique selon l'invention, ainsi qu'un élément de carrosserie sur laquelle la pièce est destinée à être soudée ;
- la figure 2A illustre un exemple particulier de réalisation, dans lequel la zone de libération de contraintes comporte quatre éléments de flexibilité, issus des ouvertures en forme d'arc de cercle, disposés de façon à former sensiblement une couronne autour de l'élément saillant ;
- la figure 2B illustre un autre exemple particulier de réalisation, dans lequel la zone de libération de contraintes comporte deux éléments de flexibilité, issus des ouvertures en forme de « U », disposés de façon à former sensiblement une couronne autour de l'élément saillant ;
- les figures 3A et 3B illustrent un détail d'une zone de soudure, en coupe ; la figure 3A illustre la disposition de la pièce et de l'élément de carrosserie avant soudure ; la figure 3B illustre la disposition de la pièce et de l'élément de carrosserie après soudure.

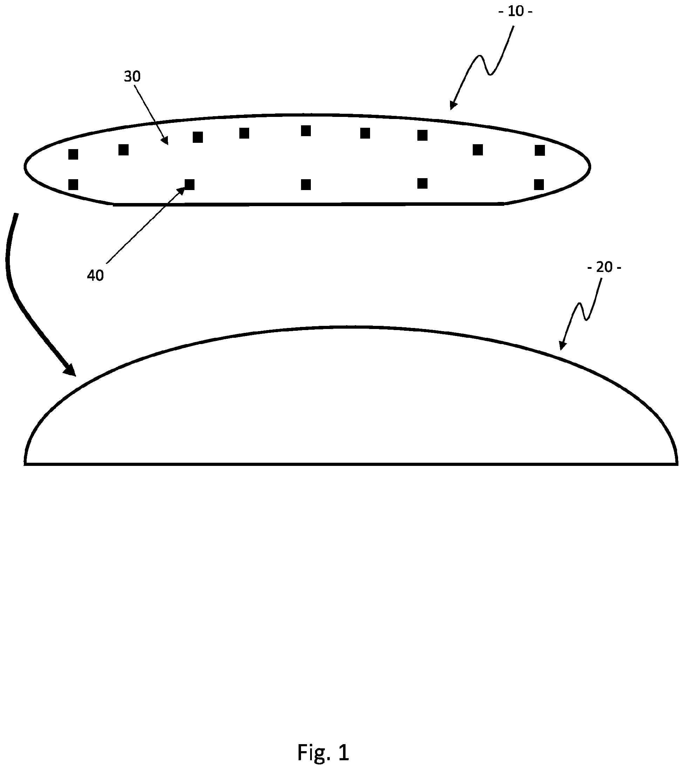

On se réfère maintenant à la figure 1 qui illustre un exemple de pièce 10 de véhicule automobile en matière plastique selon l'invention, ainsi qu'un élément de carrosserie 20 sur laquelle la pièce 10 est destinée à être soudée. Selon l'exemple, il s'agît d'un renfort de becquet destiné à être soudé sur une surface extérieure de becquet afin de former un becquet. La pièce 10 comporte au moins une paroi 30 destinée à être soudée sur l'élément de carrosserie 20.

La pièce 10 peut être réalisée dans l'une des matières suivantes : polypropylène (PP), polycarbonate-acrylonitrile butadiène styrène (PC-ABS), acrylonitrile styrène acrylate (ASA), acrylonitrile butadiène styrène (ABS).

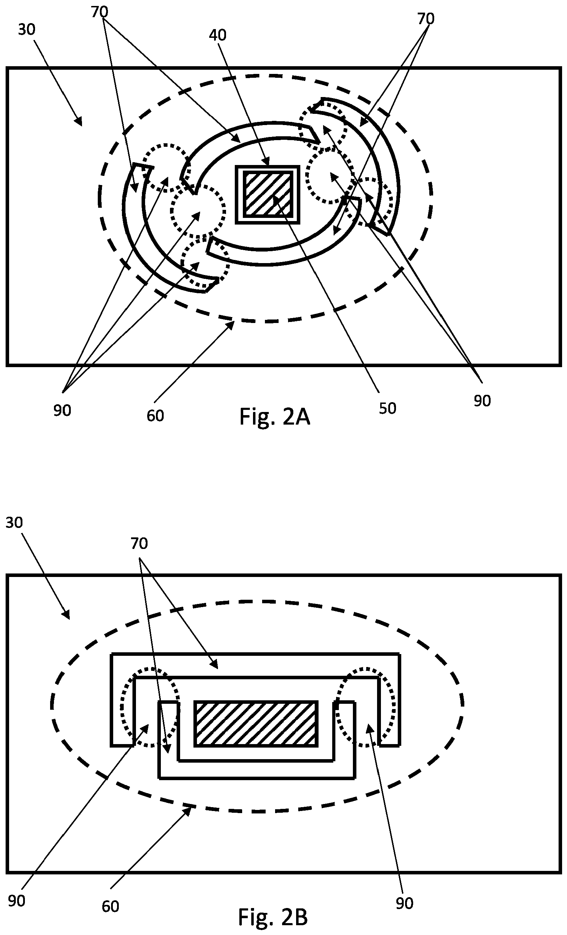

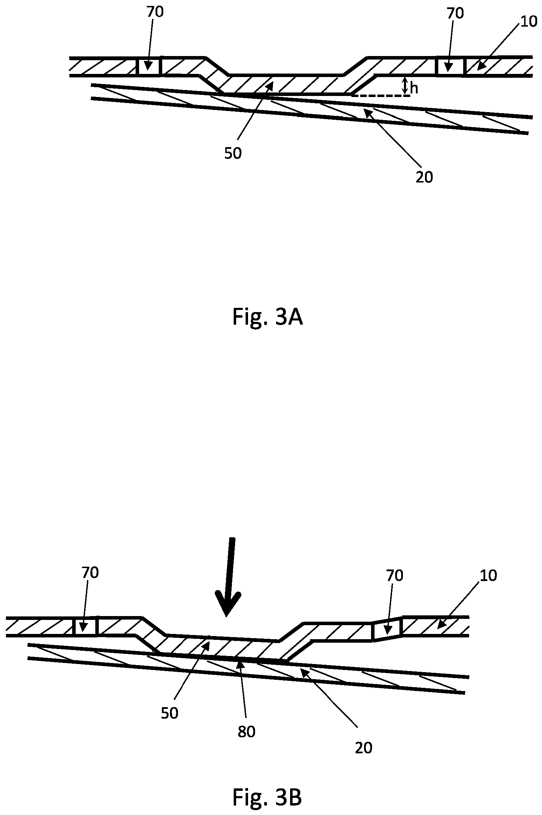

On se réfère maintenant à la figure 2A qui illustre un détail de la pièce 10 de véhicule automobile et on se réfère aussi à la figure 2B qui illustre une alternative de design du même détail de la pièce 10 de véhicule automobile. La paroi 30 comporte au moins un élément saillant 40 définissant une surface de soudage destinée à former un point de contact 50 avec l'élément de carrosserie 20. L'élément saillant 40 forme une protubérance, ayant par exemple une hauteur « h » entre 0,1 et 5 mm (mesure entre les décalages de plan, voir figure 3A) pour une épaisseur nominale de la pièce 10 de 2,4 à 3.8mm. Cette protubérance permet une liberté de mouvement de la pièce 10. La zone de soudage 50 a une épaisseur de 1,0 à 3,8 mm.

La pièce 10 comporte généralement un ensemble d'éléments saillants 40, permettant de souder la pièce 10 à l'élément de carrosserie 20.

La pièce 10 comporte autours de cet élément saillant 40, au moins une zone de libération de contraintes 60 subies par l'élément saillant 40. De préférence cette zone 60 permet de libérer les contraintes dans les trois dimensions de l'espace.

On appelle « zone de libération de contrainte » une zone de la paroi 30 permettant de libérer au moins une partie des contraintes subies par l'élément saillant 40. Ces contraintes peuvent avoir pour origine :
- la pression appliquée pour plaquer la pièce 10 et l'élément de carrosserie 20 l'une contre l'autres lors de l'opération de soudage ;
- une dilatation différentielle entre la pièce 10 et l'élément de carrosserie 20 une fois soudées.

Selon un mode de réalisation, la zone de libération de contraintes 60 est une zone flexible de la paroi 30, configurée pour permettre une libération des contraintes dans les trois dimensions de l'espace. Cette zone, de par sa flexibilité, autorise une mobilité dans toutes les directions du point de contact (souplesse angulaire).

La flexibilité de la zone de libération de contraintes 60 est obtenue en munissant localement la paroi 30 d'élément de flexibilité 70.

Ces éléments de flexibilité 70 sont choisis seuls ou en combinaison parmi les éléments suivants :
- une section restreinte par rapport à la section locale de la paroi ; pour des raisons de résistance mécanique, des nervures peuvent être rajoutées localement ;
- un évidement de matière ; un tel évidement peut être réalisé au moulage de la pièce 10, ou durant une opération de reprise comme du poinçonnage ou de l'usinage par exemple ;
- une découpe ;
- une portion en un matériau plus flexible que le matériau local de la paroi.

La position par rapport à l'élément saillant 40, la forme et le nombre d'éléments de flexibilité 70 autour de la zone de soudage, c'est-à-dire autour de l'élément saillant 40, sont fonction de la flexibilité de la zone 60 recherchée. Cette forme et ce nombre est aussi fonction des contraintes de design de la pièce 10. On peut ainsi prévoir entre 1 et 8 éléments de flexibilité 70 autour de l'élément saillant 40. Suivant les contraintes de moulage et l'espace disponible sur la pièce, la forme des éléments de flexibilité 70 pourra être différente. Un élément 70 peut ainsi être de forme circulaire ou rectangulaire, sans que ces formes soient restrictives. Pour garantir une bonne efficacité, l'élément 70 sera situé à proximité de l'élément saillant 40.Selon un mode de réalisation préférentiel, le ou les éléments de flexibilité 70 forment sensiblement une couronne autour de l'élément saillant 40. Si la zone de libération de contraintes 60 comporte plusieurs éléments de flexibilité 70, ils sont répartis autours de l'élément saillant 40.

Les éléments de flexibilité 70 permettent aussi de localiser des zone 90 de type « ressort plat » au sein de la zone de libération de contraintes 60. En effet, la section de matière de la paroi 30 est localement réduite grâce aux éléments 70 et cette zone de libération de contraintes 60 se déforme donc plus facilement que le reste de la paroi 30.On se réfère maintenant aux figures 3A et 3B qui illustrent un détail d'une zone de soudure 80. La figure 3A illustre la disposition de la pièce 10 et de l'élément de carrosserie 20 avant soudure. On constate que le contacte entre le point de contact 50 et l'élément de carrosserie 20 n'est pas suffisant (il n'est pas plan sur plan). De ce fait, il est nécessaire d'appliquer une pression sur la pièce 10 et/ou l'élément de carrosserie 20. La figure 3B illustre la disposition de la pièce 10 et de l'élément de carrosserie 20 après application de cette pression (la flèche sur la figure 3B donne la direction de cette pression), et après soudure. Les contraintes appliquées à l'élément saillant 40, sont libérées grâce à la zone de libération de contraintes 60.

### Exemple de réalisation

La figure 2A illustre un exemple particulier de réalisation, dans lequel la zone de libération de contraintes 60 comporte quatre éléments de flexibilité 70. Chaque élément de flexibilité 70 est un évidement de matières en forme de virgule, ou d'arc de cercle. Les éléments de flexibilité 70 sont de taille différentes, et ils sont disposés de façon à former sensiblement une couronne autour de l'élément saillant 40. Les zone 90 de type « ressort plat » au sein de la zone de libération de contraintes 60 sont ici au nombre de 6.

La figure 2B illustre un autre exemple particulier de réalisation, dans lequel la zone de libération de contraintes 60 comporte deux éléments de flexibilité 70. Chaque élément de flexibilité 70 est un évidement de matières en forme de « U ». Les éléments de flexibilité 70 sont de taille différentes, et ils sont disposés de façon à former sensiblement une couronne autour de l'élément saillant 40. Un seul évidement en « U » pourrait être envisagé s'il est orienté de façon à permettre une flexibilité angulaire dans l'axe de rotation le plus pertinent localement pour placer les surfaces en contact et permettre une soudure dans de bonnes conditions. Les zone 90 de type « ressort plat » au sein de la zone de libération de contraintes 60 sont ici au nombre de 2.L'invention concerne également un ensemble d'un élément de carrosserie 20 et d'une pièce 10 selon l'invention. L'élément de carrosserie peut être réalisé dans l'une des matières suivantes : polypropylène (PP), polycarbonate-acrylonitrile butadiene styrène (PC-ABS).

Selon un exemple de réalisation, l'ensemble forme une pièce de carrossière de véhicule automobile, telle qu'un hayon, un parechoc ou un becquet.

Dans le cas d'un becquet par exemple, l'élément de carrosserie 20 est la surface extérieure du becquet, et la pièce 10 est le renfort du becquet.

Le procédé de soudage se déroule en plusieurs étapes. Le renfort est positionné contre la pièce de carrosserie. Une contrainte est appliquée pour mettre en contact les deux pièces sur différents points d'appui, localement. Selon l'invention, le design particulier permet à la surface qui doit être soudée de s'orienter pour que le plan de la zone à souder soit dans le plan de la pièce de carrosserie, localement, c'est à dire à l'endroit où la soudure sera effectuée. L'orientation globale du renfort et de la pièce de carrosserie reste inchangée. Ensuite, le soudage est mis en œuvre. Les contraintes appliquées sur le renfort et la pièce de carrosserie peuvent être relâchées. Les contraintes résiduelles sont réduites grâce au design selon l'invention par rapport à une conception classique. En effet, une quantité moindre de matière tend à revenir à sa forme initiale, donc le retour élastique est moins important. Au final, la pièce de carrosserie est moins déformée localement par ces contraintes résiduelles sur la surface soudée, mais c'est la partie locale du renfort qui subit surtout la déformation. Cette partie locale du renfort épouse plus facilement l'orientation de la paroi de la pièce de carrosserie grâce à la liberté de mouvement apportée par les zones de flexibilité. On peut ainsi assimiler le mode de fonctionnement local à un ressort plat.

### Liste des références

10 : pièce de véhicule automobile en matière plastique
20 : élément de carrosserie sur laquelle la pièce 10 est destinée à être soudée
30 : paroi de la pièce 10 destinée à être soudée sur l'élément de carrosserie 20
40 : élément saillant 40 de la paroi 30,
50 : zone de contact de l'élément saillant avec l'élément de carrosserie 20 définissant une surface de soudage
60 : zone de libération de contraintes subies par l'élément saillant 40
70 : élément de flexibilité de la zone de libération de contraintes 60
80 : zone de soudure
90 : zone de type « ressort plat » de la zone de libération de contraintes 60

## Revendications

1. Pièce (10) de véhicule automobile en matière plastique, comportant au moins une paroi (30) destinée à être soudée sur un élément de carrosserie (20), ladite paroi (30) comportant au moins un élément saillant (40) définissant une surface de soudage destinée à former un point de contact avec ledit élément de carrosserie (30), **caractérisé en ce que** la pièce (10) comporte autour dudit élément saillant (40), au moins une zone de libération de contraintes (60) subies par l'élément saillant (40).

2. Pièce (10) selon la revendication précédente, dans laquelle la zone de libération de contraintes (60) est une zone flexible de la paroi (30), configurée pour permettre une libération des contraintes dans les trois dimensions de l'espace.

3. Pièce (10) selon la revendication précédente, dans laquelle la zone de libération de contraintes (60) comporte au moins un élément de flexibilité (70), choisi seul ou en combinaison parmi au moins l'un des éléments suivants : une section restreinte par rapport à la section locale de la paroi (30), un évidement de matière, une découpe, une portion en un matériau plus flexible que le matériau local de la paroi (30).

4. Pièce (10) selon la revendication précédente, dans laquelle l'élément de flexibilité (70) forme sensiblement une couronne autour de l'élément saillant (40).

5. Pièce (10) selon la revendication précédente, dans laquelle la zone de libération de contraintes (60) comporte plusieurs éléments de flexibilité (70) répartis autours de l'élément saillant (40).

6. Pièce (10) selon l'une des revendications précédentes, dans laquelle l'élément saillant forme localement une protubérance d'une hauteur d'environ 1,5 mm.

7. Pièce (10) selon l'une des revendications précédentes, dans laquelle la pièce est réalisée dans l'une des matières suivantes : polypropylène (PP), polycarbonate-acrylonitrile butadiène styrène (PC-ABS), acrylonitrile styrène acrylate (ASA).

8. Ensemble d'un élément de carrosserie et d'une pièce (10) selon l'une des revendications précédentes.

9. Ensemble selon la revendication précédente, dans lequel l'élément de carrosserie est réalisé dans l'une des matières suivantes : polypropylène (PP), polycarbonate-acrylonitrile butadiène styrène (PC-ABS), acrylonitrile butadiène styrène (ABS)

10. Ensemble selon l'une des revendications 8 et 9 formant une pièce de carrossière de véhicule automobile.

11. Ensemble selon la revendication précédente, dans lequel l'ensemble est un hayon, un pare-chocs.

12. Ensemble selon la revendication 10, dans lequel l'ensemble est un becquet, l'élément de carrosserie est une surface extérieure de becquet, et la pièce est un renfort de becquet.

## Patentansprüche

1. Teil (10) für Kraftfahrzeug aus Kunststoff, aufweisend wenigstens eine Wand (30), die dazu bestimmt ist, an einem Karosserieelement (20) verschweißt zu werden, wobei die Wand (30) wenigstens ein vorspringendes Element (40) aufweist, das eine Verschweißfläche definiert, die dazu bestimmt ist, einen Kontaktpunkt mit dem Karosserieelement (20) zu bilden, **dadurch gekennzeichnet, dass** das Teil (10) um das vorspringende Element (40) herum wenigstens eine Zone zum Entlasten von Spannungen (60), denen das vorspringende Element (40) unterliegt, aufweist.

2. Teil (10) nach dem vorhergehenden Anspruch, wobei die Zone zum Entlasten von Spannungen (60) eine flexible Zone der Wand (30) ist, die eingerichtet ist, um eine Entlastung von den Spannungen in den drei Dimensionen des Raumes zu gestatten.

3. Teil (10) nach dem vorhergehenden Anspruch, wobei die Zone zum Entlasten von Spannungen (60) wenigstens ein Flexibilitätselement (70) aufweist, das allein oder in Kombination aus wenigstens einem der folgenden Elemente ausgewählt ist: ein Querschnitt, der gegenüber dem örtlichen Querschnitt der Wand (30) beschränkt ist, eine Materialausnehmung, ein Ausschnitt, ein Teil aus einem Material, das flexibler ist als das örtliche Material der Wand (30) .

4. Teil (10) nach dem vorhergehenden Anspruch, wobei das Flexibilitätselement (70) im Wesentlichen einen Kranz um das vorspringende Element (40) herum bildet.

5. Teil (10) nach dem vorhergehenden Anspruch, wobei die Zone zum Entlasten von Spannungen (60) mehrere Flexibilitätselemente (70) aufweist, die um das vorspringende Element (40) herum verteilt sind.

6. Teil (10) nach einem der vorhergehenden Ansprüche, wobei das vorspringende Element örtlich eine Ausstülpung mit einer Höhe von etwa 1,5 mm bildet.

7. Teil (10) nach einem der vorhergehenden Ansprüche, wobei das Teil aus einem der folgenden Materialien ist: Polypropylen (PP), Polycarbonat-Acrylnitril-Butadien-Styrol (PC-ABS), Acrylnitril-Styrol-Acrylat (ASA).

8. Anordnung aus einem Karosserieelement und einem Teil (10) nach einem der vorhergehenden Ansprüche.

9. Anordnung nach dem vorhergehenden Anspruch, wobei das Karosserieelement aus einem der folgenden Materialien ist: Polypropylen (PP), Polycarbonat-Acrylnitril-Butadien-Styrol (PC-ABS), Acrylnitril-Butadien-Styrol (ABS).

10. Anordnung nach einem der Ansprüche 8 und 9, die ein Karosserieelement für Kraftfahrzeug bildet.

11. Anordnung nach dem vorhergehenden Anspruch, wobei die Anordnung eine Heckklappe, ein Stoßfänger ist.

12. Anordnung nach Anspruch 10, wobei die Anordnung ein Spoiler ist, das Karosserieelement eine Spoiler-Außenfläche ist und das Teil eine Spoilerverstärkung ist.

## Claims

1. Part (10) of a motor vehicle made from plastic material, comprising at least one wall (30) intended to be welded to a bodywork element (20), said wall (30) comprising at least one protruding element (40) defining a weld surface intended to form a point of contact with said bodywork element (30), **characterised in that** the part (10) comprises, around said protruding element (40), at least one stress relief area (60) for relieving stresses experienced by the protruding element (40).

2. Part (10) according to the preceding claim, wherein the stress relief area (60) is a flexible area of the wall (30), configured to relieve the stresses in the three dimensions in space.

3. Part (10) according to the preceding claim, wherein the stress relief area (60) comprises at least one flexibility element (70), chosen alone or in combination from at least one of the following elements: a smaller cross-section than the local cross-section of the wall (30), a recess of material, a cutout, a portion made from a material that is more flexible than the local material of the wall (30).

4. Part (10) according to the preceding claim, wherein the flexibility element (70) substantially forms a ring around the protruding element (40).

5. Part (10) according to the preceding claim, wherein the stress relief area (60) comprises several flexibility elements (70) distributed around the protruding element (40).

6. Part (10) according to one of the preceding claims, wherein the protruding element locally forms a protrusion of height approximately 1.5 mm.

7. Part (10) according to one of the preceding claims, wherein the part is made from one of the following materials: polypropylene (PP), polycarbonate-acrylonitrile butadiene styrene (PC-ABS), acrylonitrile styrene acrylate (ASA).

8. Assembly of a bodywork element and a part (10) according to one of the preceding claims.

9. Assembly according to the preceding claim, wherein the bodywork element is made from one of the following materials: polypropylene (PP), polycarbonate-acrylonitrile butadiene styrene (PC-ABS), acrylonitrile butadiene styrene (ABS).

10. Assembly according to claim 8 or 9, forming a bodywork part of a motor vehicle.

11. Assembly according to the preceding claim, wherein the assembly is a tailgate, a bumper.

12. Assembly according to claim 10, wherein the assembly is a spoiler, the bodywork element is a spoiler outer surface, and the part is a spoiler reinforcement.
